# FASCICULE DE BREVET EUROPEEN

(11) **EP 2 766 892 B1**
(45) Date de publication et mention de la délivrance du brevet: **15.11.2017**
(21) Numéro de dépôt: 12781372.3
(22) Date de dépôt: 08.10.2012
(51) Int. Cl.: G09B 5/06, G09B 5/08, G06F 3/0354, G06F 1/16, G09B 19/00, G09B 21/00, G06F 3/033

(54) **TABLETTE DE COMMUNICATION POUR L'ENSEIGNEMENT**
KOMMUNIKATIONS-TABLET ZUM LEHREN
COMMUNICATION TABLET FOR TEACHING

(30) Priorité: 11.10.2011 FR 1159141
(43) Date de publication de la demande: 20.08.2014
(73) Titulaire: Poullain, Franck, 94240 l'Hay-les-Roses (FR)
(72) Inventeur: Poullain, Franck, 94240 l'Hay-les-Roses (FR)
(74) Mandataire: Cabinet HERRBURGER
(86) Numéro de dépôt international: PCT/FR2012/052282
(87) Numéro de publication internationale: WO 2013/054029

(56) Documents cités:
- EP-A2- 2 275 900
- WO-A1-02/084634
- TW-A- 200 837 533
- US-A1- 2004 139 571
- US-A1- 2005 243 072
- US-A1- 2006 262 106
- US-A1- 2008 111 798
- US-A1- 2008 174 571
- US-A1- 2012 081 270

## Description

L'invention concerne un dispositif d'enseignement constitué par la combinaison d'une borne de communication sans fil située dans une classe d'un établissement scolaire, et d'une série de tablettes de communication respectivement propres à un élève ou à un professeur de cette classe.

Les tablettes de communication sont connues du grand public, et elles sont utilisées également dans les établissements scolaires. Ces tablettes ont un format restreint, voisin du format A5, sont fragiles et sensibles aux chocs et aux liquides, ont un écran à cristaux liquides gourmand en énergie et générant une fatigue oculaire lors de longue lecture, ont un stylet d'écriture peu commode ou nécessitant une écriture à main levée, ont un moyen de communication sans fil qui utilise une gamme de fréquence (2,45 GHz) présumée génotoxique et qui dans une salle de classe où toutes les personnes utilisent une tablette crée un brouillard électromagnétique permanent dont les effets à long terme ne sont pas connus, ont une autonomie restreinte à quelques jours, et n'ont pas de sécurité pour identifier l'utilisateur et sécuriser le flux de communication. Les modèles à grand format A4 ou 2 pages A4 ajoutent le poids aux inconvénients cités précédemment. Les modèles avec stylet n'offrent pas un confort d'écriture semblable à l'écriture sur papier.

Un but de l'invention est de proposer un dispositif d'enseignement dont les tablettes ne présentent pas ces inconvénients. Un autre but de l'invention est de proposer un dispositif d'enseignement pour l'enseignement secondaire, au collège et au lycée, qui dispense l'élève d'avoir à porter des livres, des cahiers et des moyens d'écriture, qui fonctionne avec l'écosystème scolaire, qui soit économe en énergie et respectueux des règles relatives à l'environnement électromagnétique des élèves.

L'invention a ainsi pour objet un dispositif d'enseignement pour l'enseignement dans un établissement tel qu'un collège ou un lycée, caractérisé en ce qu'il comporte :
- d'une part une borne de communication sans fil située dans un local de l'établissement, notamment dans une classe de celui-ci et coopérant avec un serveur propre à cet établissement et assurant le contrôle de cette borne de communication, et
- d'autre part une série de tablettes de communication électroniques respectivement propres à un usager du local, en particulier à un élève ou à un professeur de la classe et comprenant chacune des moyens d'identification de l'usager ainsi qu'une interface de communication sans fil permettant une communication à faible puissance et à faible portée entre les tablettes et/ou entre une tablette et la borne de communication,
- chacune des tablettes de communication étant constituée par deux volets rigides iso-fonctionnels articulés sur une charnière apte à assurer une rotation de 360° et comportant chacun une face extérieure résistant aux chocs et aux projections de liquide et une face intérieure équipée d'un écran tactile de lecture et d'écriture manuelle au moyen d'un stylet, à affichage à encre électronique, ainsi qu'à leur partie interne des moyens informatique de traitement et de communication de données et/ou des mémoires de stockage de données et/ou des accumulateurs.

L'invention concerne aussi une tablette de communication pour l'enseignement faisant partie intégrante d'un tel dispositif et caractérisée en ce qu'elle comporte deux volets rigides, articulés sur une charnière apte à assurer une rotation de 360°, chacun des deux volets comportant une face extérieure résistant aux chocs et aux projections de liquide, et une face intérieure résistant aux chocs et aux projections de liquide et comportant un écran de lecture et d'écriture manuelle au moyen d'un stylet.

Selon une autre caractéristique, la charnière est creuse pour y loger un stylet, et comporte des connecteurs aptes à recevoir une fiche de type jack, ou tout autre connecteur au standard électrique USB, apte à communiquer selon ce standard, à recharger en électricité la tablette et à y brancher tout type de périphériques USB. L'utilisation de connecteurs au format jack permet de faciliter le branchement de câbles pour les aveugles et les enfants, ce type de connecteur étant autocentré et ne nécessitant pas de manipulation supplémentaire pour déterminer le sens d'orientation du connecteur.

De préférence chacun des deux écrans de lecture et d'écriture porte sur ses bords des onglets tactiles de navigation pour la sélection de la matière enseignée et de l'activité exercée par l'utilisateur.

De manière avantageuse dans sa version pour aveugles, les écrans de lecture et d'écriture comportent des lignes en relief de guidage du doigt ou de la main de l'utilisateur aveugle, et des caractères Braille d'identification en début de ligne, et sur les onglets de navigation.

Avantageusement l'écran d'écriture comporte un sous-main de roulement et le stylet comporte une bille en gomme dure, ou tout autre matériau apte à rouler sur le sous-main, qui restitue à l'utilisateur la sensation d'écrire au stylo à bille sur un bloc de papier.

De manière avantageuse la communication sans fil de la tablette est assurée dans la gamme de fréquences de 868 à 915 MHz, avec une portée d'environ 10m, une puissance inférieure ou égale à 1mW, la tablette restant en écoute permanente et n'émettant que sur instructions explicites.

Avantageusement les surfaces extérieures des volets et les surfaces intérieures entourant les écrans sont recouvertes d'un film solaire pour la production d'électricité.

De manière avantageuse la tablette peut comporter à l'extérieur de l'un des volets un protège-écran, apte, après encliquetage sur lui-même, à constituer un support pour le maintien du volet en position inclinée.

De préférence le stylet comporte d'une part un accumulateur et une antenne, d'autre part un connecteur pour prise jack ou tout autre connecteur au standard électrique USB, pour transmettre la pression exercée sur la pointe d'écriture d'une part par ondes électromagnétiques, d'autre part par liaison filaire, respectivement.

Il est à noter que le document US 2012/0081270 A1 décrit également un dispositif d'enregistrement comportant des tablettes de communication électroniques équipées d'un stylet et constituées par deux volets rigides articulés autour d'une charnière et dont la face interne est équipée d'un écran tactile.

Toutefois, le stylet ne comporte pas de bille de roulement, la charnière ne permet une liberté de rotation que de 80° et les écrans tactiles ne comportent pas trois couches.

D'autres caractéristiques et avantages de l'invention ressortent de la description qui suit d'un mode de réalisation, donné à titre illustratif et non limitatif, faite en relation aux dessins annexés qui représentent :
Figure 1, vue de face en position ouverte de la tablette selon l'invention,
Figure 2, vue en perspective du côté droit de la tablette,
Figure 3, vue en perspective de derrière de la tablette,
Figure 4, vue en perspective d'en haut de la tablette,
Figure 5, vue en perspective de devant avec clavier et souris,
Figure 6, vue de côté de la tablette en position ouverte à l'italienne avec stylet dans la charnière,
Figure 7, vue en coupe transversale de la tablette en position portrait ouverte et inclinée sur son pied,
Figure 8, vue en coupe transversale de la tablette en position fermée avec le stylet dans la charnière,
Figure 9, vue en coupe transversale en position ouverte,
Figure 10, vue en coupe transversale en position bloc-notes,
Figure 11, vue en coupe transversale en position ouverte avec le cache protecteur sur le volet gauche,
Figure 12, vue en coupe transversale en position bloc-notes avec le cache protecteur sur le volet gauche,
Figure 13, vue en coupe transversale en position ouverte avec le cache en guise de support en position basse,
Figure 14, vue en coupe transversale en position ouverte avec le cache en guise de support en position haute,
Figure 15, vue de côté en perspective en position ouverte avec le cache en guise de support en position haute,
Figure 16, vue de derrière en position ouverte avec le cache en guise de support en position haute,
Figure 17, vue du cache protecteur lorsqu'il est à plat sur un des côtés du volet gauche,
Figure 18, vue en coupe longitudinale du stylet à bille posé sur la surface multicouche,
Figure 19, vue de face en position ouverte avec les lignes de guidage en relief pour aveugles,
Figure 20, vues en perspective de la tablette ouverte (a, b,) et fermée (c) avec le bandeau élastique de fermeture dans ses différentes positions,
Figure 21, vue en coupe partielle du stylet avec connecteur, accumulateur et antenne.
Figure 22, plan d'une salle de classe avec un agencement de tables frontal. Figure 23, mise en situation des tablettes, et de la borne de communication dans l'écosystème.

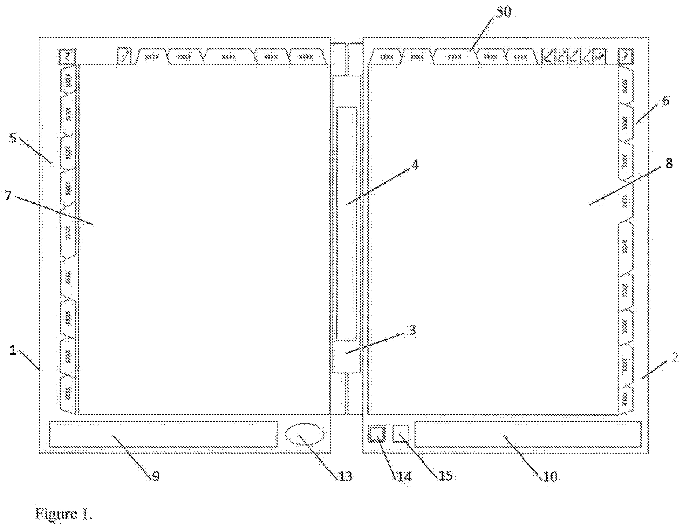

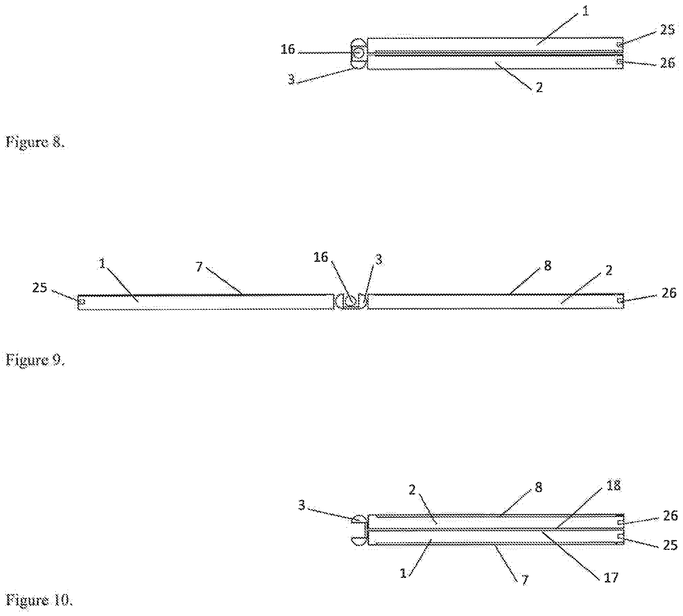

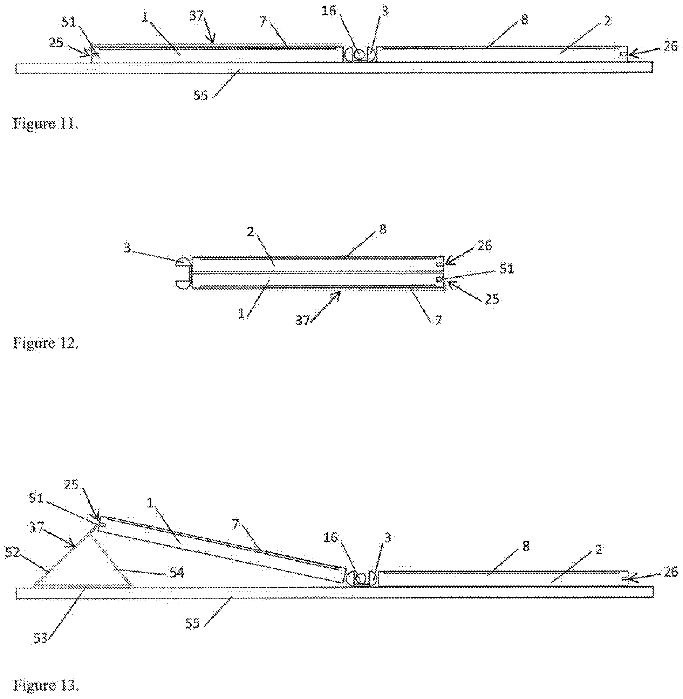

La tablette de communication 66 (fig.1 à 4) comporte un volet gauche 1, un volet droit 2 et une charnière 3. Chacun des volets 1, 2, comporte une face extérieure, respectivement 17, 18, résistant aux chocs et aux projections de liquide, et une face intérieure, respectivement 5, 6, comportant un écran, respectivement 7, 8, de lecture et d'écriture et résistant aux chocs et aux projections de liquide. L'écriture sur un écran 7, 8 est assurée manuellement au moyen d'un stylet 16. La charnière 3 comporte, du côté intérieur, une cavité 4 apte à recevoir le stylet. La charnière 3 est assez large pour que les deux volets 1, 2 s'y articulent indépendamment l'un de l'autre. Lorsque la tablette est fermée, les faces intérieures 5, 6 des volets 1, 2 sont en vis-à-vis, et la cavité 4 est fermée par le chant des deux volets 1, 2 (Fig.8), le stylet 16 étant ainsi bloqué dans la cavité 4. Lorsque la tablette est ouverte (Fig.11) les deux volets 1, 2, sont à plat, les écrans 7, 8, sont accessibles pour la lecture et l'écriture, et la cavité 4 est ouverte, l'accès au stylet 16 étant libre.

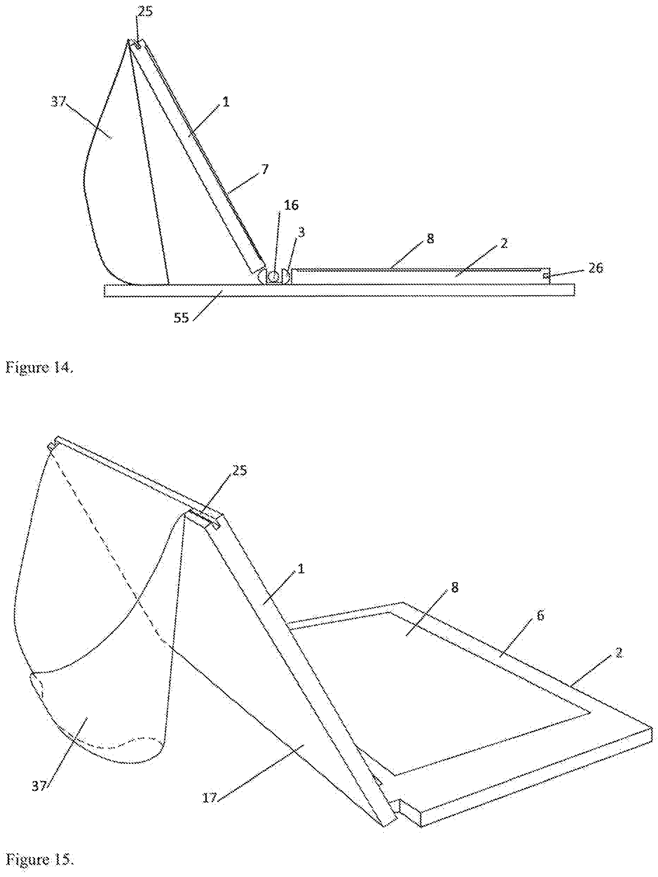

Lorsque la tablette est repliée en position bloc-notes (Fig.10), c'est-à-dire lorsque l'un des volets 2 a fait une rotation de 360° par rapport à l'autre volet 1, les faces extérieures 17, 18 des deux volets sont en vis-à-vis, et les faces intérieures 5, 6 sont à l'extérieur. La charnière 3 est alors ouverte vers l'extérieur, sa cavité 4 étant accessible. La tablette est utilisable en bloc-notes, un seul écran 8, ou bien 7 dans le cas d'une utilisation par un gaucher, étant utile pour la lecture ou l'écriture. Pour protéger l'autre écran 7, un protège-écran 37 est mis en place (Fig. 11, 12). Ce protège-écran optionnel 37 présente sur un bord un jonc 51 insérable dans une rainure 25, 26 prévue sur le chant du volet 1, 2 (Fig.9, 15). Le protège-écran 37 peut être constitué de trois bandes 52, 53, 54, articulées deux à deux, et aptes à être repliées en trièdre (Fig. 13), pour constituer un support pour le volet 2 lorsque la tablette est posée sur une surface plane 55 telle qu'une table.

Ce protège-écran 37 peut comporter un film solaire qui servira de source d'énergie complémentaire pour l'alimentation de la tablette ou la recharge de ses accumulateurs. Ce protège-écran peut être rattaché indifféremment au volet 7 ou au volet 8 selon que l'élève est gaucher ou droitier.

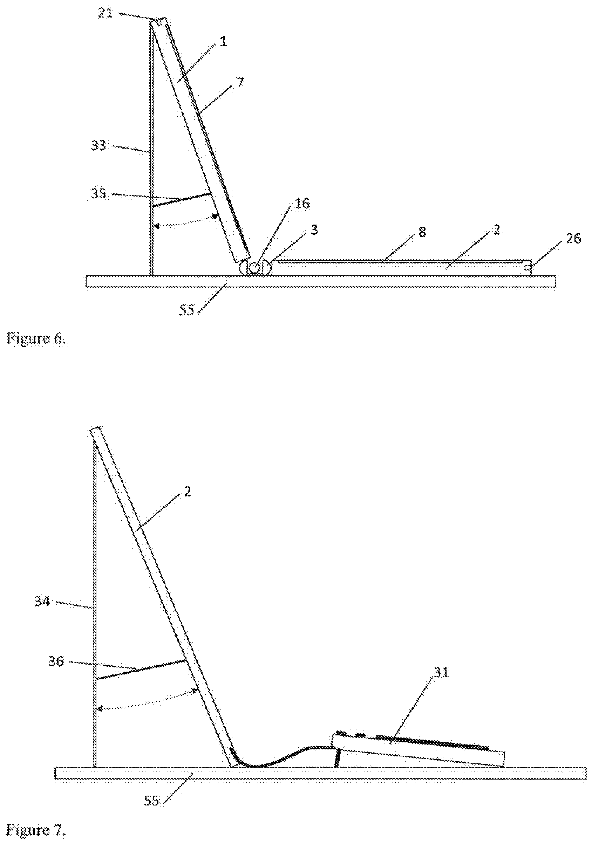

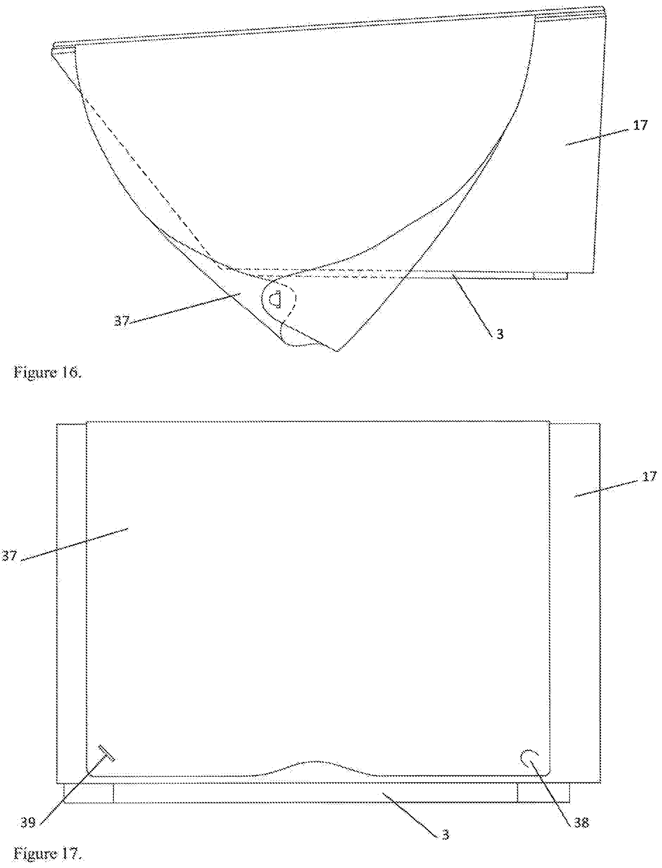

Si l'utilisateur de la tablette souhaite avoir un écran 8 à plat pour l'écriture, et un écran 7 relevé pour la lecture dans une position nettement plus proche de la verticale tel que représenté en Fig.6, alors il utilise comme support du volet 1, un pied 33, retenu par un ruban 35 et rabattable dans le dos du volet 1. Il peut également enrouler le protège-écran 37 lorsqu'il est inséré dans la rainure 25 pour en faire un support pour l'écran 1 (Fig. 14, 15, 16). Les deux coins libres du protège-écran 37 présentent respectivement un ergot 38 et une fente 39 (Fig. 17) assurant un encliquetage.

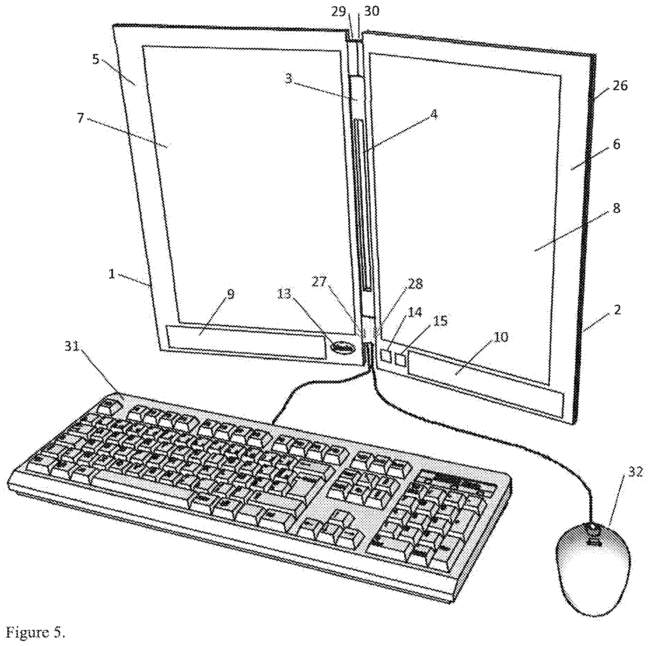

Si l'utilisateur veut avoir les deux écrans 7, 8 en position verticale, il ouvre la tablette en formant un dièdre avec les volets 1, 2, et pose sur la surface plane 55 les bords inférieurs des volets 1, 2 tel un paravent (Fig.5). Il peut connecter un clavier et une souris dans les connecteurs USB 27, 28.

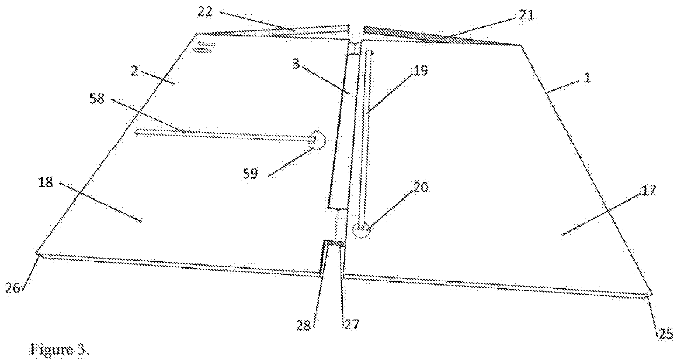

Si l'utilisateur souhaite avoir les deux écrans 7, 8 dans un même plan oblique proche de la verticale, il utilise un pied 34 rabattable et encastrable dans la charnière 3 (Fig.7), qui est retenu par un ruban 36. Un pied 19 est utilisable de la même manière sur un modèle de tablette (Fig.3) qui n'a pas de pied dans la charnière 3 mais dans le dos du volet 1. Une cavité 20 est prévue pour l'extraction du pied 19.

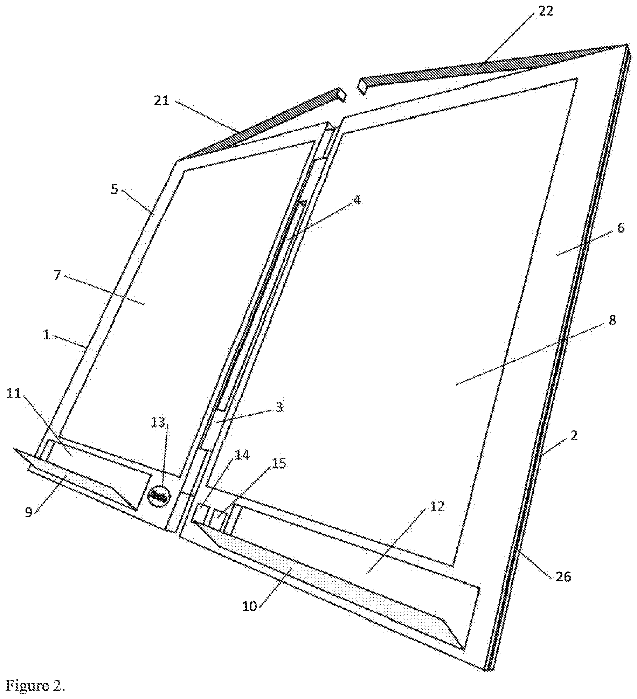

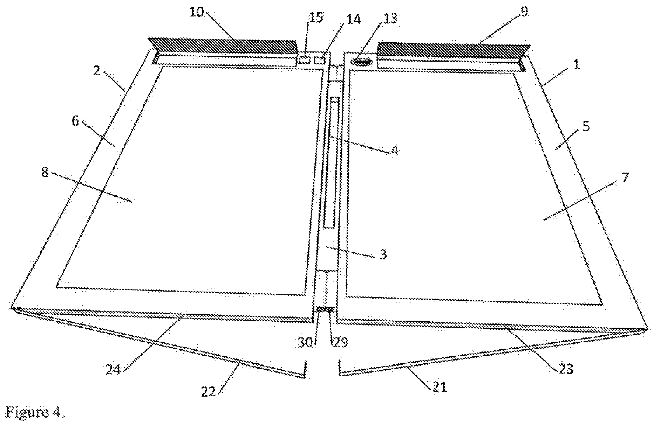

À sa partie inférieure, chacun des volets 1, 2 présente un tiroir 11, 12 qui est clos à l'aide d'une trappe 9,10. Lorsqu'elle est rabattue sur le tiroir 11, 12, cette trappe 9, 10 sert également de support à la main de l'élève lorsqu'il écrit sur la partie inférieure de l'écran 7, 8 (Fig.2, 4).

Avantageusement, ce tiroir 11,12 présente un espace de rangement d'accessoires, tels qu'un compas ou un câble USB.

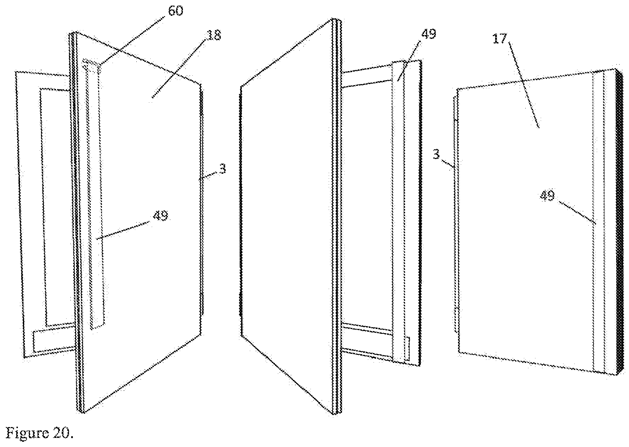

La tablette est maintenue en position fermée (Fig.20) au moyen d'un bandeau élastique 49 attaché au dos du volet 2 au moyen d'une accroche 60. Ce bandeau maintient également le stylet 16 dans son logement 4. Le maintien en position fermée de la tablette grâce à ce bandeau évite que le stylet 16 sorte de son logement 4 et soit ainsi perdu lors d'une manipulation malencontreuse par l'élève, ou que les écrans 7,8 soient altérés lors d'une chute.

Chacun des volets 1, 2 comporte, au voisinage de la charnière 3, un connecteur 27,28,29,30 apte à recevoir une fiche de type jack ou tout autre type de connecteur (Fig.3, 4) au standard électrique USB, apte à communiquer selon ce standard, à recharger en électricité la tablette, et à y brancher tout type de périphérique USB. Ce connecteur 27, 28, 29, 30 est en retrait par rapport au bord inférieur du volet 1, 2 de façon à permettre la connexion d'un câble USB tout en laissant la possibilité de garder la tablette droite (Fig. 5, 7), en appui sur une surface plane 55. Dans l'exemple de la Fig.5, la tablette est reliée à un clavier 31 et une souris 32 par un câble USB. Ces connecteurs étant dans une concavité, ils sont moins susceptibles de subir une détérioration, par exemple lors d'une chute, que s'ils étaient placés sur les côtés des volets. Similairement, si ces connecteurs étaient sur les côtés des volets, un élève pourrait débrancher ou tordre les câbles par malice. Parce que les câbles sont dans la charnière, ils deviennent difficilement accessibles lorsque la tablette est en position paravent et donc moins sujets à l'espièglerie des élèves.

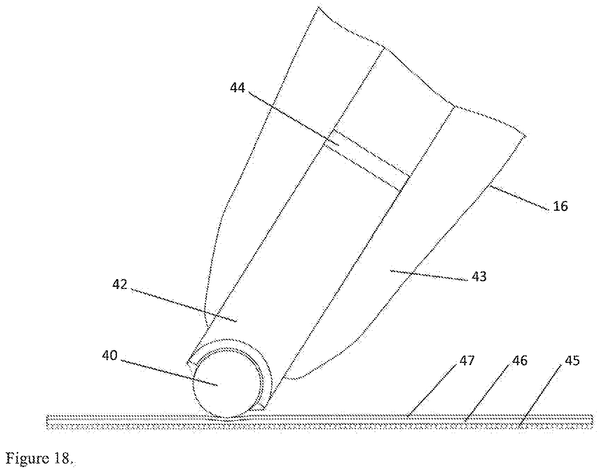

Chacun des écrans 7,8 comporte au moins trois couches (Fig.18) : une couche inférieure 45 qui est la couche d'affichage, une couche intermédiaire 46 et une couche supérieure 47. La couche inférieure 45 est constituée d'un affichage à encre électronique ou toute autre technologie d'affichage offrant des caractéristiques similaires : faible consommation électrique, qualité d'affichage équivalente au papier et résistant aux chocs. La couche intermédiaire 46 et la couche supérieure 47 sont indifféremment l'une, une surface d'écriture à stylet 16, l'autre un sous-main de roulement, pour donner à l'utilisateur la sensation d'écrire sur un bloc-notes.

Le stylet 16 comporte un corps extérieur 43, et une tige axiale 42. La tige 42 porte à son extrémité saillante une bille 40 en gomme dure ou tout autre matériau apte à rouler sur la couche supérieure 47 de l'écran 7,8 en créant une dépression de roulement suffisante pour assurer une sensation d'écriture semblable à celle d'écrire sur un bloc-notes.

Le stylet 16 comporte une bille 40 en gomme dure ou tout autre matériau pour pouvoir effectivement rouler, et non pas simplement glisser, sur le sous-main de roulement 47 : la gomme, ou l'autre matériau, accroche le revêtement du sous-main et produit une résistance équivalente à celle de l'écriture d'un stylo à bille sur une feuille de papier.

L'épaisseur du sous-main de roulement 47 reproduit la sensation d'épaisseur de plusieurs feuilles de papier et procure ainsi le même confort d'écriture qu'un stylo à bille traditionnel lorsqu'il est utilisé sur un bloc-notes.

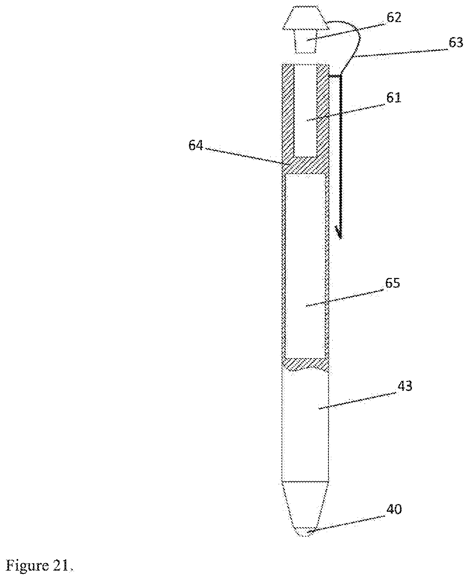

Dans l'exemple de réalisation de la fig. 21, le stylet 16 est capable d'enregistrer des informations relatives à la pression exercée par la main sur le stylet. Cette information peut être ensuite transmise à la tablette si l'utilisateur le souhaite, soit par l'antenne intégrée 64 au stylet, soit par un câble reliant la prise USB du stylet à la tablette par l'un des connecteurs USB de la charnière 27, 28, 29, 30. Le stylet dispose d'un connecteur 61 femelle à son autre extrémité en forme de prise jack ou tout autre type de connecteur au standard électrique USB. Cette information relative à la pression n'est pas nécessaire à l'écriture sur la tablette, mais elle permet de recréer de manière logicielle des épaisseurs de tracé proportionnelles à la pression enregistrée par le stylet. L'utilisation du câble n'engendre pas de consommation de courant, à l'inverse de l'émission par voie radio qui puise son énergie dans l'accumulateur 65 intégré au stylet. L'accumulateur 65 du stylet se recharge automatiquement lorsque le stylet 16 est relié à la tablette. À noter que la puissance du rayonnement électromagnétique du stylet est bien moindre compte-tenu de la proximité avec la tablette. Le stylet 16 comporte un capuchon 62 rattaché par un fil 63.

Le stylet 16 comporte d'une part un accumulateur 65 et une antenne 64, d'autre part un connecteur 61 en forme de prise jack ou tout autre type de connecteur au standard électrique USB, pour transmettre la pression exercée sur la pointe d'écriture 40 d'une part par ondes électromagnétiques, d'autre part par liaison filaire, respectivement.

Chacun des volets 1, 2 de la tablette présente une certaine épaisseur et dans le volume intérieur sont logés les moyens informatiques de traitement et de communication des données, les mémoires de stockage des données, et des accumulateurs. La partie supérieure de ce volume intérieur est constituée de deux compartiments 23, 24 rendus accessibles par les couvercles supérieurs 21 et 22 (Fig. 4). Ces compartiments 23, 24 servent à ranger des outils de travail plats tels que rapporteur, équerre et règle, par exemple. Avantageusement, l'écran 7,8 comprend une couche supérieure 47 utilisée comme sous-main de roulement, une couche intermédiaire 46 utilisée pour capturer les mouvements de la bille 40 et des doigts de l'utilisateur, et une couche inférieure assurant l'affichage des signes écrits par la bille 40, en utilisant la technologie de l'encre électronique ou tout autre technologie d'affichage offrant des caractéristiques similaires : faible consommation électrique, qualité d'affichage papier et résistant aux chocs.

Des films solaires peuvent recouvrir les surfaces extérieures 17, 18 des volets 1,2 et le pourtour 5,6 des écrans 7,8 et le protège-écran 37. Les avantages de la disposition de films solaires sont multiples : les batteries peuvent être plus petites et plus légères, le risque d'épuisement des batteries est amoindri et la quantité de métaux rares dans les batteries est restreinte, ce qui préserve l'environnement.

En dehors de la surface réservée à la lecture et à l'écriture sur chacun des écrans 7,8, les bords supérieur et extérieur de chaque écran comportent des onglets de navigation 50, tactiles, permettant de sélectionner par exemple la matière enseignée, des dictionnaires, des livres de référence mis en mémoire, des données personnelles ou des données relatives au collège ou au lycée.

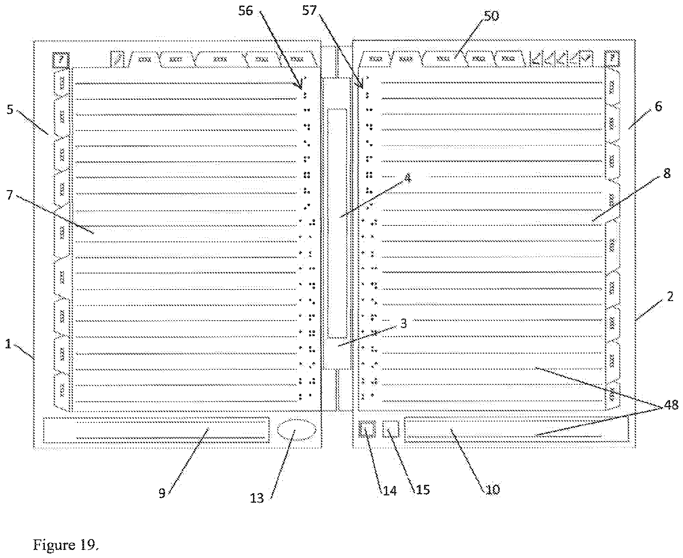

Dans sa version pour aveugles (Fig. 19), la tablette présente sur les écrans 7,8 d'une part des lignes en relief 48 de guidage du doigt ou de la main de l'utilisateur, d'autre part en début de ligne, à gauche ou à droite un numéro de ligne en caractères Braille 56,57. Des caractères Braille sont aussi prévus sur les onglets de navigation 50 : des lettres sur le bord supérieur de l'écran, des numéros de ligne sur le bord extérieur de l'écran.

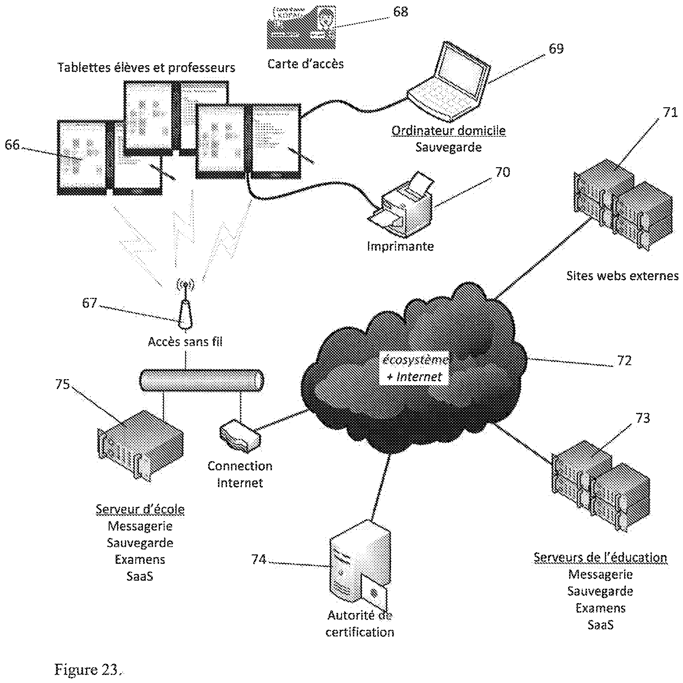

La mise en oeuvre de la tablette de communication pour l'enseignement est assurée de la manière décrite ci-après (Fig.1). Tout d'abord, la tablette est allumée par action sur le bouton Marche/Arrêt 13. Ensuite elle est mise en service au moyen d'une carte individuelle d'identification 68 (Fig. 23) sans contact de l'élève ou du professeur sur le capteur 14 et éventuellement de l'empreinte digitale sur le capteur 15. La matière à l'étude (histoire, mathématiques, par exemple) est sélectionnée par un onglet 50 sur le bord extérieur de l'écran 8, et l'activité (dictée, contrôle, dictionnaire, par exemple) est sélectionnée par un onglet 50 sur le bord supérieur de l'écran 7,8. L'élève droitier fait apparaître le document de référence sur l'écran 7 de gauche et écrit sur l'écran 8 de droite, l'élève gaucher fait apparaître le document de référence sur l'écran 8 et écrit sur l'écran 7.

La tablette est équipée d'une interface de communication sans fil, permettant une communication à faible puissance (1mW), à faible portée d'environ 10m, de tablette à tablette ou de tablette à borne dédiée, avec un nombre de destinataires pouvant aller jusqu'à 40 (nombre d'élèves d'une classe) voire davantage pour satisfaire au cas d'une salle d'examen, et dans une gamme de fréquences comprise entre 868 et 915 MHz qui est estimée moins toxique pour la santé que la gamme de 2,45 GHz utilisée par la communication Wifi et les fours à micro-ondes. Cette communication est assurée par transmission aléatoire de façon à éviter une émission simultanée de toutes les tablettes d'une classe, ce qui est plus générateur d'énergie électromagnétique. L'interface de communication sans fil de la tablette est par défaut en mode réception et ne déclenche l'émission que sur instructions explicites de l'utilisateur ou du professeur.

En dehors de la classe, la tablette peut être reliée à un ordinateur par l'intermédiaire d'un câble USB branché sur l'un des connecteurs 27, 28, 29, 30. La tablette contient un processeur de traitement de signaux audios pour l'enseignement des langues et de la musique. Les connecteurs 27, 28, 29, 30 sont de préférence aptes à recevoir des fiches de type jack, moins fragiles et plus commodes d'usage dans un environnement scolaire. La connexion au moyen d'un câble USB permet le transfert de fichier en l'absence de communication sans fil, la copie de fichiers vers une tablette ou à partir d'une tablette, la mise à jour de fichiers ou le chargement de fichiers, la liaison à un ordinateur, l'accès à Internet, la liaison à une imprimante, et la liaison à un dispositif analogique pour l'enseignement oral ou musical. Les connecteurs 27, 28, 29, 30 sont aussi utilisés pour la recharge des batteries internes à la tablette.

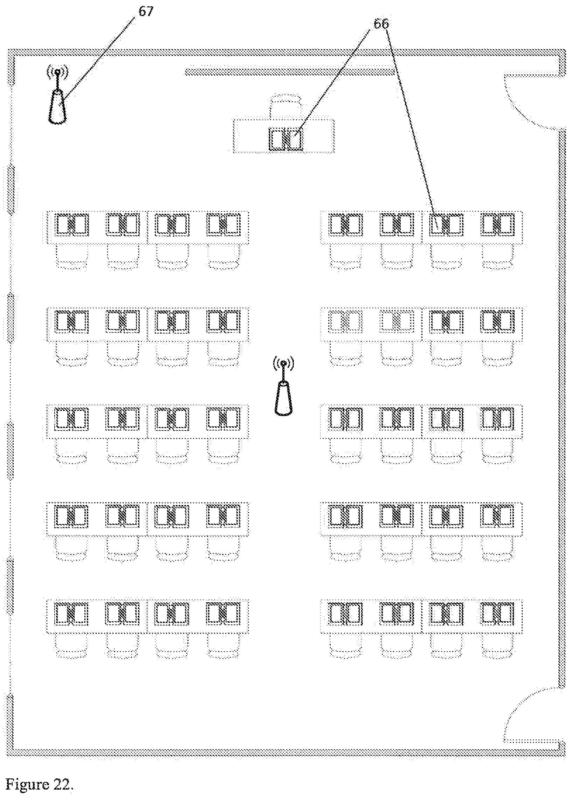

La tablette 66 est apte à évoluer dans un écosystème constitué essentiellement d'une borne de communication sans fil 67 par classe (Fig. 22), d'un serveur 75 du collège ou du lycée contrôlant les bornes de communication sans fil des classes, de l'ordinateur 69 et de l'imprimante de l'élève à son domicile 70 (Fig. 23), des serveurs 71 accessibles par Internet 72, des autorités de certification 74 et des sites accessibles par Internet et accrédités par les autorités de tutelle 73.

## Revendications

1. Dispositif d'enseignement pour l'enseignement dans un établissement tel qu'une école, un collège ou un lycée, comportant :
- d'une part une borne de communication sans fil (67) située dans un local de l'établissement, notamment dans une classe de celui-ci et coopérant avec un serveur propre à cet établissement et assurant le contrôle de cette borne de communication, et
- d'autre part, une série de tablettes de communication électroniques (66) respectivement propres à un usager du local, en particulier à un élève ou à un professeur de la classe équipées d'un stylet et comprenant chacune une interface de communication sans fil permettant une communication à faible puissance et à faible portée entre les tablettes et/ou entre une tablette et la borne de communication, **caractérisé en ce que**
- le stylet (16) comporte une bille de roulement (40) en un matériau dur,
- les tablettes de communication (66) sont autonomes et équivalentes et chacune de ces tablettes comprend des moyens d'identification de l'usager et est constituée par deux volets rigides iso-fonctionnels (1, 2) articulés autour d'une charnière (3) apte à assurer une rotation de 360° et comportant chacun une face extérieure (17, 18) résistant aux chocs et une face intérieure (5, 6) équipée d'un écran tactile de lecture et d'écriture manuelle au moyen du stylet (16) ainsi qu'à leur partie interne des moyens informatiques de traitement et de communication de données et/ou des mémoires de stockage de données et/ou des accumulateurs, et
- chacun des écrans comporte au moins trois couches à savoir une couche inférieure (45) à affichage à encre électronique ainsi qu'une couche (46) constituant une surface d'écriture à stylet et une couche (47) constituant un sous main de roulement ayant une épaisseur reproduisant la sensation d'épaisseur de plusieurs feuilles de papier et procurant le même confort d'écriture qu'un stylo à bille traditionnel lorsqu'il est utilisé sur un bloc note.

2. Dispositif d'enseignement selon la revendication 1,
**caractérisé en ce que**
la charnière (3) de la tablette de communication (66) est creuse de sorte que le stylet (16) puisse être logé dans la cavité (4) de cette charnière et y être bloqué lorsque la tablette est fermée, les faces intérieures (5, 6) des deux volets (1, 2) étant en vis-à-vis.

3. Dispositif d'enseignement selon l'une quelconque des revendications 1 et 2,
**caractérisé en ce que**
la charnière (3) de la tablette de communication (66) possède des connecteurs (27-30) aptes à recevoir une fiche de type jack ou tout autre connecteur au standard électrique USB, apte à communiquer selon ce standard, à recharger en électricité la tablette et à y brancher tout type de périphériques USB, ces connecteurs étant en retrait par rapport au bord extérieur des volets.

4. Dispositif d'enseignement selon la revendication 1,
**caractérisé en ce que**
chacun des deux écrans de lecture et d'écriture des tablettes de communication porte sur leurs bords des onglets tactiles de navigation (50) pour la sélection de la matière enseignée et de l'activité exercée par l'utilisateur.

5. Dispositif d'enseignement selon la revendication 1,
**caractérisé en ce que**
dans leurs version pour aveugles, les écrans de lecture et d'écriture des tablettes de communication comportent des lignes en relief (48) de guidage du doigt ou de la main de l'utilisateur aveugle, et des caractères Braille d'identification en début de ligne, à gauche ou à droite, et sur les onglets de navigation.

6. Dispositif d'enseignement selon la revendication 1,
**caractérisé en ce que**
la communication sans fil entre les tablettes de communication est assurée dans la gamme de fréquences de 868 à 915 MHz, avec une portée d'environ 10 m, une puissance inférieure ou égale à 1 mW, les tablettes restant en écoute permanente et n'émettant que sur instructions explicites.

7. Dispositif d'enseignement selon la revendication 1,
**caractérisé en ce que**
les surface extérieures (17, 18) es volets (1, 2) et les surfaces intérieures (5, 6) entourant les écrans (7, 8) et celle du protège-écran (37) des tablettes de communication sont recouvertes d'un film solaire pour la production d'électricité.

8. Dispositif d'enseignement selon la revendication 1,
**caractérisé en ce que**
le protège-écran (37) inséré dans la rainure de l'un des volets (1, 2) des tablettes de communication est apte, après encliquetage sur lui-même, à constituer un support pour le maintien du volet en position inclinée.

9. Dispositif d'enseignement selon la revendication 1,
**caractérisé en ce que**
le stylet (16) des tablettes de communication intègre d'une part un accumulateur (65) et une antenne (64), d'autre part un connecteur (61) pour prise jack ou tout autre connecteur au standard électrique USB, pour transmettre la pression exercée sur la pointe d'écriture (40) d'une part par ondes électromagnétiques, d'autre part par liaison filaire, respectivement.

10. Tablette de communication (66), en ce qu'elle fait partie intégrante d'un dispositif d'enseignement conforme à l'une quelconque des revendications 1 à 9.

## Patentansprüche

1. Unterrichtsvorrichtung für den Unterricht in einer Einrichtung wie zum Beispiel einer Schule oder einem Gymnasium, aufweisend:
- einerseits eine drahtlose Kommunikationseinheit (67), der in einem Raum der Einrichtung, insbesondere in einem Klassenraum davon, angeordnet ist, und mit einem für die Einrichtung geeigneten Server zusammenarbeitet und die Kontrolle dieses Kommunikationsanschlusses gewährleistet, und
- andererseits eine Reihe von elektronischen Kommunikationstablets (66), die jeweils für einen Benutzer des Raums geeignet sind, insbesondere für einen Schüler oder einen Lehrer des Klassenraums, mit einem Stift versehen sind und jeweils eine drahtlose Kommunikationsschnittstelle aufweisen, die eine Kommunikation mit geringer Leistung und geringer Reichweite zwischen den Tablets und/oder einem Tablet und dem Kommunikationsanschluss ermöglicht,
**dadurch gekennzeichnet, dass**
- der Stift (16) eine Rollkugel (40) aus einem harten Material aufweist,
- die Kommunikations-Tablets (66) autonom und gleichwertig sind und jedes dieser Tablets Mittel zur Identifizierung des Benutzers aufweist und aus zwei starren Klappen (1, 2) mit gleicher Funktion besteht, die um ein Scharnier (3) herum angeordnet sind, das dazu geeignet ist, eine 360°- Rotation zu gewährleisten, und jeweils eine schlagfeste Außenseite (17, 18) und eine Innenseite (5, 6), die mit einem Berührungsbildschirm zum Lesen und manuellen Schreiben mittels des Stifts (16) versehen ist, sowie in ihrem Inneren elektronische Mittel zur Bearbeitung und Datenkommunikation und/oder Speicher zur Speicherung von Daten und/oder Akkus aufweisen, und
- jeder der Bildschirme mindestens drei Schichten aufweist, nämlich eine untere Schicht (45) zum Anzeigen mit elektronischer Tinte sowie eine Schicht (46), die eine Oberfläche zum Schreiben mit Stift bildet, und eine Schicht (47), die eine Unterlage zum Rollen bildet, die eine Schichtdicke aufweist, die das Gefühl der Dicke von mehreren Blättern Papier wiedergibt und den gleichen Schreibkomfort bietet wie ein traditioneller Kugelschreiber, wenn er auf einem Notizblock verwendet wird.

2. Unterrichtsvorrichtung nach Anspruch 1,
**dadurch gekennzeichnet, dass**
das Scharnier (3) des Kommunikationstablets (66) hohl ausgebildet ist, derart, dass der Stift (16) in dem Hohlraum (4) dieses Scharniers (6) angeordnet und darin gesichert werden kann, wenn das Tablet geschlossen ist, wobei die Innenseiten (5, 6) der zwei Klappen (1, 2) einander gegenüberliegend sind.

3. Unterrichtsvorrichtung nach einem der Ansprüche 1 oder 2,
**dadurch gekennzeichnet, dass**
das Scharnier (3) des Kommunikationstablets (66) Verbinder (27-30) geeignet zur Aufnahme eines Klinkensteckers oder jeden anderen Verbinder mit dem elektronischen Standard USB, geeignet zur Kommunikation gemäß diesem Standard, zur Aufladung des Tablets mit Elektrizität und zur Verbindung jeder Art von USB Peripheriegeräten, aufweist, wobei diese Verbinder gegenüber der Außenseite der Klappen zurückversetzt sind.

4. Unterrichtsvorrichtung nach Anspruch 1,
**dadurch gekennzeichnet, dass**
jeder der zwei Bildschirme zum Lesen und Schreiben der Kommunikationstablets an ihren Rändern taktile Navigationsregisterkarten (50) für die Auswahl des Unterrichtsfachs und der vom Benutzer ausgeübten Tätigkeit aufweist.

5. Unterrichtsvorrichtung nach Anspruch 1,
**dadurch gekennzeichnet, dass**
in der Version für Blinde, die Bildschirme zum Lesen und Schreiben der Kommunikationstablets Reliefzeilen (48) zur Führung des Fingers oder der Hand des blinden Benutzers, und Braille-Identifikationszeichen am Anfang der Zeile, rechts oder links, und auf den Navigationsregisterkarten aufweisen.

6. Unterrichtsvorrichtung nach Anspruch 1,
**dadurch gekennzeichnet, dass**
die drahtlose Kommunikation zwischen den Kommunikationstablets in dem Frequenzbereich von 868 bis 915 MHz gewährleistet ist, mit einer Reichweite von ungefähr 10 m, einer Leistung kleiner oder gleich 1 mW, wobei die Tablets stets empfangen können und nur auf ausdrückliche Anweisungen senden.

7. Unterrichtsvorrichtung nach Anspruch 1,
**dadurch gekennzeichnet, dass**
die Außenseiten (17, 18) der Klappen (1, 2) und die Innenseiten (5, 6), die die Bildschirme (7, 8) umgeben, und die des Bildschirmschutzes (37) der Kommunikationstablets mit einer Solarfolie zur Stromerzeugung bedeckt sind.

8. Unterrichtsvorrichtung nach Anspruch 1,
**dadurch gekennzeichnet, dass**
der Bildschirmschutz (37) eingesetzt in die Nut einer der Klappen (1, 2) der Kommunikationstablets dazu fähig ist, nach dem Einrasten in sich selbst, einen Träger zum Halten der Klappe in Schrägposition zu bilden.

9. Unterrichtsvorrichtung nach Anspruch 1,
**dadurch gekennzeichnet, dass**
der Stift (16) der Kommunikationstablets einerseits einen Akku (65) und eine Antenne (64), andererseits einen Verbinder (61) für Klinkenstecker oder jeden anderen Verbinder mit dem elektronischen Standard USB umfasst, um den auf die Schreibspitze (40) ausgeübten Druck einerseits durch elektromagnetische Wellen, andererseits durch Drahtverbindung zu übertragen.

10. Kommunikationstablet (66), **dadurch gekennzeichnet, dass** es integraler Bestandteil einer Unterrichtsvorrichtung gemäß einem der vorherigen Ansprüche 1 bis 9 ist.

## Claims

1. Teaching device for teaching in an educational institution such as a primary school, a secondary school or a college, comprising:
- a wireless communication terminal (67) located in premises of the educational institution, in particular in a classroom thereof, and cooperating with a server that is specific to said educational institution and that ensures control of said communication terminal, and
- a series of electronic communication tablets (66) that are specific to a user located at the premises, in particular a pupil or a class teacher, which tablets are provided with a stylus and each comprise a wireless communication interface that allows low-power and short-range communication between the tablets and/or between a tablet and the communication terminal,
**characterised in that**
- the stylus (16) comprises a ball bearing (40) made of a hard material,
- the communication tablets (66) are self-contained and identical and each of said tablets comprises means for identifying the user and is made of two rigid isofunctional panels (1, 2) that are articulated about a hinge (3) capable of ensuring 360° rotation and each comprise a shock-resistant outer face (17, 18) and an inner face (5, 6) provided with a touch screen for reading and writing manually using the stylus (16) as well as, in the inner part of said panels, computing means for data processing and communication and/or data storage memories and/or batteries, and
- each of the screens comprises at least three layers, namely a lower electronic ink display layer (45) as well as a layer (46) that forms a surface for writing using a stylus, and a layer (47) that forms a rolling desk pad having a thickness that reproduces the feeling of the thickness of a plurality of sheets of paper and provides the same writing comfort as a traditional ballpoint pen when it is used on a note pad.

2. Teaching device according to claim 1, **characterised in that** the hinge (3) of the communication tablet (66) is hollow such that the stylus (16) can be housed in the recess (4) in said hinge and can be locked therein when the tablet is closed, the inner faces (5, 6) of the two panels (1, 2) facing one another.

3. Teaching device according to either claim 1 or claim 2, **characterised in that** the hinge (3) of the communication tablet (66) has connectors (27-30) that are capable of receiving a jack-type plug or any other connector of USB electrical standard, capable of communicating according to said standard, electrically recharging the tablet and connecting any type of USB devices thereto, said connectors being recessed relative to the outer edge of the panels.

4. Teaching device according to claim 1, **characterised in that** each of the two reading and writing screens of the communication tablets are equipped, on the edges thereof, with touch-sensitive navigation tabs (50) for selecting the subject taught and the activity performed by the user.

5. Teaching device according to claim 1, **characterised in that**, in the version thereof for the blind, the reading and writing screens of the communication tablets comprise raised lines (48) for guiding the finger or the hand of the blind user, and Braille identification characters at the start of the line, on the left or on the right, and on the navigation tabs.

6. Teaching device according to claim 1, **characterised in that** the wireless communication between the communication tablets is provided in a frequency range of from 868 to 915 MHz, having a range of approximately 10 m, a power of less than or equal to 1 mW, the tablets remaining in continuous listening mode and only transmitting on receipt of explicit instructions.

7. Teaching device according to claim 1, **characterised in that** the outer surfaces (17, 18) of the panels (1, 2) and the inner surfaces (5, 6) surrounding the screens (7, 8) and that of the screen protector (37) of the communication tablets are covered with a solar film for generating electricity.

8. Teaching device according to claim 1, **characterised in that** the screen protector (37) inserted in the groove in one of the panels (1, 2) of the communication tablets is capable, after snap-fitting to itself, of forming a support for holding the panel in a tilted position.

9. Teaching device according to claim 1, **characterised in that** the stylus (16) of the communication tablets includes a battery (65) and an antenna (64), as well as a connector (61) for a jack plug or any other connector of USB electrical standard, in order to transmit the pressure exerted on the writing tip (40) by means of electromagnetic waves and by means of a wired connection, respectively.

10. Communication tablet (66) in that it is an integral part of a teaching device according to any one of claims 1 to 9.
